# EUROPEAN PATENT SPECIFICATION

(11) **EP 2 695 696 B1**
(45) Date of publication and mention of the grant of the patent: **15.03.2017**
(21) Application number: 13179908.2
(22) Date of filing: 09.08.2013
(51) Int. Cl.: B23K 9/12, B23K 9/133, B23K 9/32, B65H 57/12, B65H 57/14, F16L 3/015, F16L 11/18, F16L 3/18

(54) **Line for guiding a wire, in particular a welding wire, with at least two different types of bodies**
Leitung zum Führen eines Drahtes, insbesondere eines Schweißdrahtes, mit zwei unterschiedlichen Körpern
Conduit pour guider un fil, en particulier un fil de soudage, avec deux types différents de corps

(30) Priority: 09.08.2012 IT MI20121423; 17.01.2013 US 201313744394
(43) Date of publication of application: 12.02.2014
(73) Proprietor: AWDS Technologies SRL, 38068 Rovereto (TN) (IT)
(72) Inventor: Gelmetti, Carlo, 37017 Lazise (IT); Corradini, Filippo, 38060 Isera (IT)
(74) Representative: Prinz & Partner mbB

(56) References cited:
- WO-A2-2007/010171
- US-A- 5 778 939
- US-A1- 2011 114 617

## Description

The invention generally relates to a liner for guiding wire, in particular welding wire, according to the preamble of claim 1 (see, for example, WO2007/010171).

Such liner allows minimizing attrition and smoothly feeding wires and is used, but not limited to, in the Gas Metal Arc (GMAW), Metal Inert Gas (MIG), Flux Core Arc (FCAW), Submerged Arc Welding (SAW) and laser welding processes.

The prior art teaches of a variety of liners with rolls, but most of them are constructed in such way that their performance and durability is often negatively affected by their construction.

WO 2007/010171 discloses an embodiment that utilizes the joining of a series of identical assemblies and in which the rolls contained in each assembly partially define the wire passage; the closing and definition of the wire passage is achieved by combining two assemblies with the rolls of the first assembly in one position and those of the second assembly turned at a different angle with respect to the first.

One advantage of this embodiment is that, with rolls in the same position separated between them by at least one assembly with rolls in a different position, the wire does not touch on many rolls and the friction is reduced. However, since the groups of rolls are placed in an alternating pattern, each group of rolls in the same position is necessarily separated from the next by such distance that it has become necessary to add a conical funnel shaped guiding tube between the assemblies to allow the initial wire insertion into the liner when the liner is curved. But, after the wire has been inserted, when the wire feeder pulls it, the wire could scratch against the guiding tube in tight bends, thus generating the attrition that it was supposed to eliminate.

One additional complication with WO 2007/010171 is that the assemblies with rolls are connected between themselves in an alternate pattern. Therefore, they
do not freely rotate; in case of tension built on the liner by sharp robot arm movements, the assembly joints could snap and break, causing downtime and production stops for repairs.

WO2011/147565 discloses a liner which does not have the problem of the large distance between adjacent sets of rolls and the issue of tension being built up between individual bodies of the liner. In this liner, each assembly carries all the rolls (in particular four rolls) needed to define the wire passage. The sets of rolls are mounted so close to one another that no guiding tube is needed to efficiently insert the wire. A junction outer ring allows all the assemblies to freely rotate by more than 360°, thus discharging the tension built on the liner by torsional robot arm movements. However, the proximity of the sets of rolls involves necessarily the presence of many rolls, and this can cause some feeding problems when the wire feeder pulls, because the wire has to touch on many rolls. The experience teaches that fewer rolls touched equals to a diminished friction and reduced feeding complications.

In both prior art constructions, the liners are formed with identical assemblies and all the sets of rolls are identical in shape and are designed to roll when in contact with the wire, for the purpose of feeding it without attrition.

US 5,778,939 discloses a flexible core for connecting a pick-up nozzle and a body of the vacuum cleaner or the end of a suction tube attached to the cleaner.

The object of the invention is to provide a liner which allows guiding the wire with low friction and allows insertion of the wire without problems, even if the liner is held in a curved state during insertion of the wire.

This object is solved with a liner as defined in claim 1, wherein the bodies are at least of two different types, with the rolling elements mounted in the bodies of the first type have a distance from a center line of the liner which is smaller than the distance at which the rolling elements mounted in the bodies of the second type are arranged from the center line. Using two different types of rolling assemblies with rolling elements of different purpose, thereby serving different functions, helps improving the performance of the liner both during insertion of the wire and in normal use when the wire is pulled through the liner for wire feeding. Arranging the rolling elements of the bodies of the second type at a larger distance from the center line of the liner, according to the present invention, ensures that these rolling elements during normal operation will not participate in guiding the liner, thus reducing the friction. The rolling elements held in the bodies of the second type are primarily involved only during insertion of the wire since they contribute to efficiently maintain the wire smoothly guided along the liner guarantee even if the liner is held in a curved state when the welding wire is being inserted.

Preferably, the bodies of the different types are arranged in a repetitive pattern, e.g. A-A-B-A-A-B-..., A-A-A-B-B-A-A-A-B-B-..., etc.

Preferably, the liner is formed from adjacent bodies of a first type and a second type arranged in an alternating manner, each of the bodies carrying a set of rolling elements. An alternating arrangement (A-B-A-B-...) has shown specific advantages for liners which are used with small curves.

According to a preferred embodiment, the rolling elements held in the bodies of the first type have a diameter which is different from the diameter of the rolling elements held in the bodies of the second type, in particular a larger diameter. Using rolling elements with a larger diameter helps minimizing the friction as a larger diameter of the rolling elements reduces the force which is necessary for making the rolling elements turn on their axles. The smaller diameter which is used for the rolling elements held in the bodies of the second type is advantageous for achieving a compact construction of the liner. The fact that the smaller diameter has a tendency to increase the friction to a certain extent can be accepted as these rolling elements are primarily active only during the insertion of the wire, but not during normal operation.

Preferably, adjacent bodies can be rotated around the center line of the liner in an unlimited manner. This guarantees that no torsional tension can build up in the liner during operation.

According to a preferred embodiment, the liners of the first type are connected to each other by means of a pivot connection. The pivot connection allows a swiveling movement between two bodies of the first type arranged next to each other, thus giving the liner the flexibility to be moved in every direction since the bodies of the liner can rotate with respect to each other so that the individual pivot connections are arranged in a random manner.

The amount of the pivoting movement of one body of the first type with respect to the next body of the first type is preferably limited. This allows to control the maximum curvature of the liner and to prevent excessive bending which could be detrimental to the structural integrity of the liner and to proper guiding of the wire.

A very effective means for limiting the pivoting movement of one body of the first type with respect to the next body of the first type is to provide the bodies of the first type with a stop which can contact the body of the second type arranged between two bodies of the first type. Such stop can be a suitable surface provided on the bodies of the first type, resulting in small dimensions.

Preferably, a ball joint-like contact is provided between the body of the first type and the adjacent body of the second type. This allows pivoting the bodies of the first type with respect to each other while maintaining a constant contact between adjacent bodies of the first and second type.

Preferably, each body of the first type has a contact surface at both of its axial ends which is in the form of a hollow spherical segment. The opposite contact surfaces of bodies of the first type which are arranged next to each other form kind of an accommodation for the body of the second type arranged between the bodies of the first type, with the contact surfaces sliding with respect to the body of the second type if there is a pivoting movement between the bodies of the first type.

Preferably, each body of the second type has an elastic ring at both of its axial ends, in particular an O-ring. The elastic ring exerts an elastic force which tends to push the bodies of the first type apart, thus maintaining the liner straightened in order to facilitate the insertion of the wire.

According to a preferred embodiment, the bodies each have the general form of a ring. This results in a compact liner which can very easily be arranged additionally within a protective tube.

Preferably, the rolling elements are mounted on bearing pins held in the respective body. The bearing pins allow an automated assembly of the individual bodies and allow to reliably mount the rolling elements so as to be rotatable with low frictions.

Preferably, the bearing pins are arranged in a staggered manner. This helps reducing the outer diameter of the liner.

According to a preferred embodiment, each bearing pin is blocked at one end by an adjacent bearing ring and at the opposite end by a blocking protrusion provided at the body. This arrangement of the bearing pins guarantees that they are reliably held at the respective body in a very simple yet effective manner.

According to a preferred embodiment, connection elements are provided which are clipped to the bodies of the first type. A clipping connection allows connecting the individual bodies in a very simple manner and also to disassemble the liner if this is necessary.

Preferably, the bodies of the first type have a clipping collar at each of its axial ends to which the connection element is clipped so as to be rotatable by 360° with respect to the body of the first type around the center line of the body. The clipping collar can very conveniently be formed at the structure which on the interior side forms the contact surface at which a body of the second type abuts.

According to a preferred embodiment, different types of connection elements are used for connecting the bodies of the first type to each other, namely a male connection element and a female connection element which are mounted at opposite axial ends of two bodies of the first type arranged next to each other. The male connection elements and the female connection elements can be clipped to each other, for example by using a pivot pin on the male connection element which engages into an opening of the female connection element such that a pivot axis is defined around which bodies of the first type arranged next to each other can pivot with respect to each other.

According to an alternative embodiment, the bodies of the first type are provided with identical connection elements at opposite axial ends. These connection elements can in particular be formed as female connection elements which can be clipped onto the bodies of the second type. Using the same type of end connector at both axial ends of the liner reduces the number of parts and components necessary for their installation and operation. Further, it allows significant economical advantages and simpler spare parts inventories, thereby minimizing the equipment necessary for the production of the end connectors (molds, etc).

Preferably, the bodies have accommodation openings for the rolling elements, the accommodation openings being open in a radial direction. This allows a visual inspection of the individual rolling elements for a determination if a replacement of certain bodies of the liner is necessary.

According to a preferred embodiment, one of the types of connection elements has a skirt which extends partially over the accommodation openings so as to shield the rolling elements held in the accommodation openings of the bodies of the first type at the outside. The skirt effectively prevents that an outer cover of the liner, for example a tube, can protrude into one of the accommodation openings which could result in the cover touching the respective rolling element and increasing the friction.

According to a preferred embodiment, each of the bodies of the second type is held trapped between two bodies of the first type arranged next to each other. As the bodies of the second type are held between the bodies of the first type, no particular mounting means for the bodies of the second type are necessary. The bodies of the second type are automatically mounted at their correct position when the bodies of the first type are connected to each other.

The invention will now be described with reference to an embodiment which is shown in the enclosed drawings. In the drawings,
FIG. 1 shows a liner according to a first embodiment with two termination elements in a perspective view,
FIG. 2 shows a longitudinal section through the liner shown in FIG. 1,
FIG. 3 shows at an enlarged scale detail III from FIG. 2,
FIG. 4 shows the liner of FIG. 1 in a curved state,
FIG. 5 shows the liner of FIG. 4 in a longitudinal section,
FIG. 6 shows a body of a first type and two connection elements in a perspective, exploded view,
FIG. 7 shows a side view of the body of the first type and the two connection elements of FIG. 6 in a mounted condition,
FIG. 8 shows a section along line VIII-VIII of FIG. 7,
FIG. 9 shows a bottom view of the assembly of FIG. 7,
FIG. 10 shows a top view of the assembly of FIG. 7,
FIG. 11 shows a body of a second type in a perspective view,
FIG. 12 shows the body of FIG. 11 in an exploded view,
FIG. 13 shows the body of FIG. 11 in a side view,
FIG. 14 shows a top view of the body of FIG. 13,
FIG. 15 shows a cross-section along line XV-XV of FIG. 14,
FIG. 16 shows a cross-section along line XVI-XVI of FIG. 13,
FIG. 17 shows two bodies of the first type with a body of the second type arranged between the bodies of the first type,
FIG. 18 shows a cross-section along line XVIII-XVIII of FIG. 17,
FIG. 19 shows a body of the first type with a body of the second type in a perspective view,
FIG. 20 shows the assembly of FIG. 19 in a side view,
FIG. 21 shows detail 21 of FIG. 20 at an enlarged scale,
FIG. 22 shows detail 22 of FIG. 20 at an enlarged scale,
FIG. 23 shows a top view of the assembly of FIG. 20,
FIG. 24 shows a liner according to a second embodiment in a perspective view,
FIG. 25 shows in a perspective view a body of the first type with two attached connection element as used in the liner of FIG. 24,
FIG. 26 shows the body and the connection elements of FIG. 25 in an exploded view,
FIG. 27 shows the body and the connection elements of FIG. 25 in a side view,
FIG. 28 shows a cross section of the body and the connection elements of FIG. 27,
FIG. 29 shows in a perspective view a body of the second type as used in the liner of FIG. 24,
FIG. 30 shows the body of FIG. 29 in an exploded view,
FIG. 31 shows the body of FIG. 29 in a side view, and
FIG. 32 shows a cross section of the body of FIG. 31.

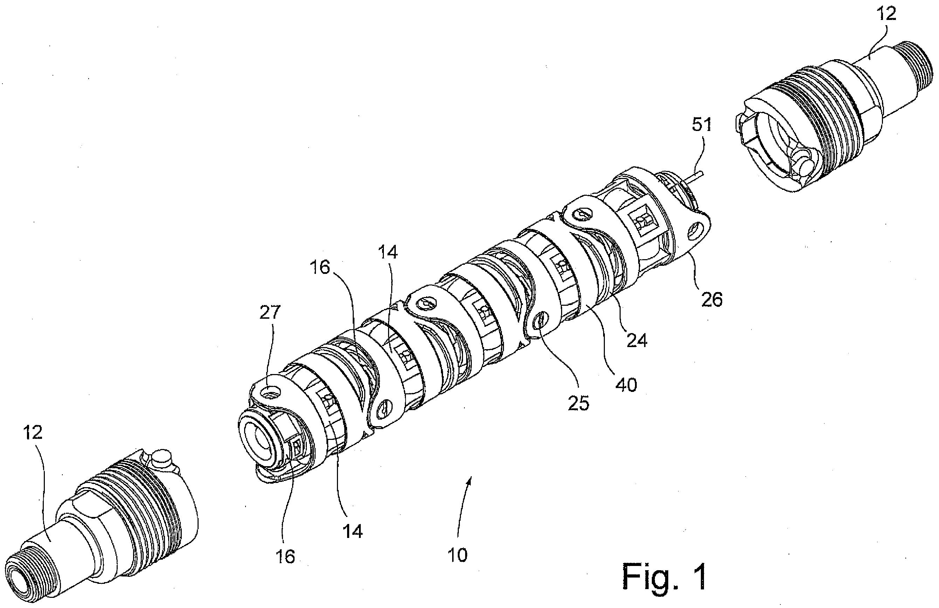

In FIGs. 1 to 5, a liner 10 according to a first embodiment for guiding a wire is shown. Liner 10 can in particular be used for guiding welding wire between a storage place, for example a bulk container, and a feeder or from a feeder to a welding torch. In the embodiment shown, two terminals 12 are used which form opposite ends of liner 10. Liner 10 is bi-directional as the wire can be fed into the liner from either side and can be transported through the liner in either direction. In the embodiment shown, identical termination element 12 are being used which greatly simplifies the installation of the liner as no particular installation direction has to be observed.

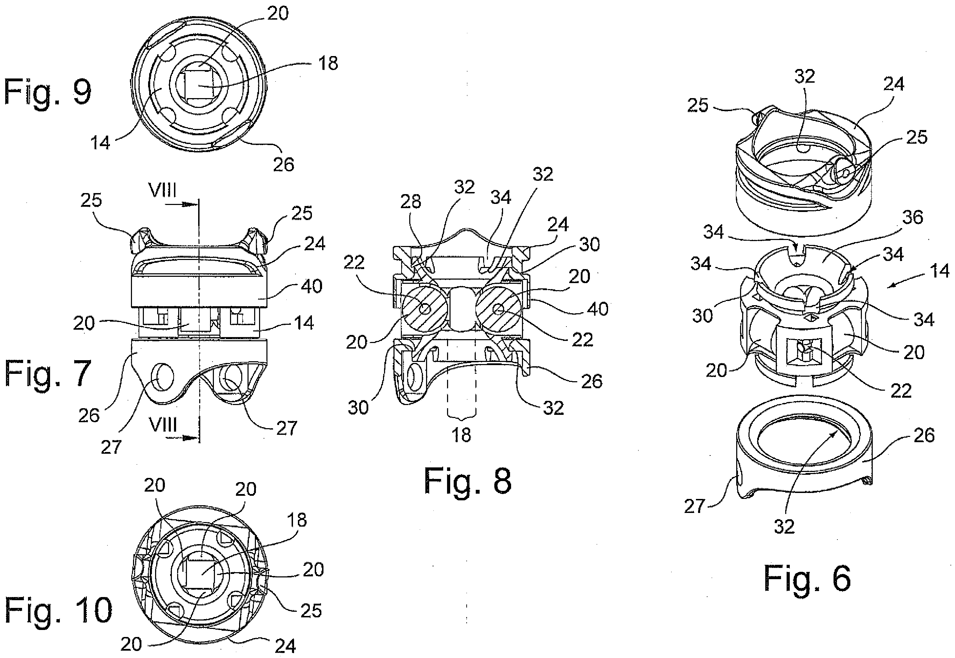

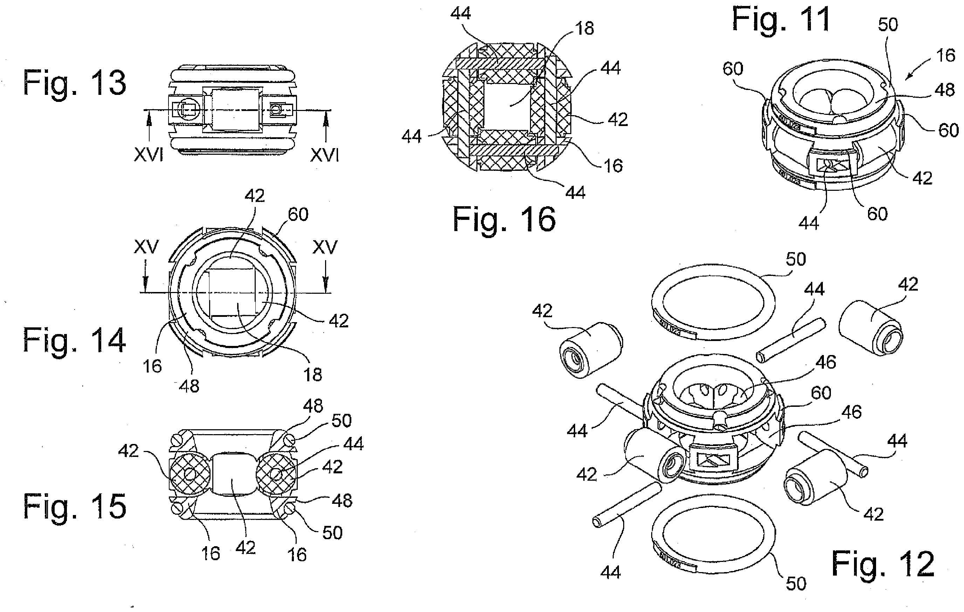

Liner 10 is formed from bodies 14 of a first type (please see in particular FIGs. 6 to 10) and bodies 16 of a second type (please see in particular FIGs. 11 to 16) which are arranged in an alternating manner. In other words, a body 14 of the first type is followed by a body 16 of the second type which in turn is followed by a body 14 of the first type, and so on.

Body 14 of the first type is generally ring-shaped with an interior opening or passage for the wire to be guided (designated with reference numeral 18 in FIG. 8) and comprises a set of rolling elements 20. In the embodiment shown, each body 14 of the first type is provided with four rolling elements 20 which are arranged pair wise opposite to each other. Each rolling element 20 is arranged in an accommodation opening 21 which extends in body 14 from the outer circumference to the inner circumference of the ring-shaped body, and is mounted on a bearing pin 22 so as to be rotatable. The particular arrangement of the bearing pins 22 with respect to each other and the way they are secured at body 14 is the same as will be explained later for the bearing pins which are used in body 16 of the second type.

The dimensions of rolling elements 20 with respect to the respective accommodation opening is such that the rolling elements do not protrude over the outer surface of ring-shaped body 14 of the first type.

The bodies 14 of the first type can be equipped with connecting elements which are here formed as a male connecting element 24 and a female connecting element 26. The connecting elements 24, 26 are formed as separate pieces which are connected to body 14 of the first type.

Male connection element 24 is provided with two pivot pins which are arranged diametrically opposite to each other on an axis which is perpendicular to the center line of body 14. Female connection element 26 is provided with two pivot openings 27 which are adapted for receiving pivot pins 25 and which also are arranged diametrically opposite each other.

For attaching connecting elements 24, 26 to bodies 14, a clipping connection is used. This is formed here by means of a clipping collar 28 which is integrally provided at each of the opposite axial ends of the bodies 14. Clipping collar 28 has a shoulder 30 which can snap behind an associated shoulder 32 provided on an interior surface of connecting elements 24, 26. As connecting collar 28 is provided with recesses 34 which extend in a longitudinal direction, it can yield radially inwardly in an elastic manner which allows to clip connecting elements 24, 26 in axial direction to the bodies 14 of the first type, or to disassemble them from the bodies if necessary.

On the inner side of clipping collar 28, a contact surface 36 is provided which receives a body 16 of the second type. Surface 36 is formed as a hollow spherical segment so that a ball joint-like connection to the body 16 of the second type received there is achieved.

The center of curvature of hollow spherical segment 36 is on the pivot axis which is defined by pivot pins 25.

In a mounted condition, connecting elements 24, 26 can be rotated by 360° with respect to body 14 at which they are mounted. As can be seen in FIGs. 7 and 8, one of the connecting elements, here connecting element 24, is provided with a skirt 40 which is ring-shaped and extends around the circumference of body 14 so as to shield or cover approximately half of the accommodation openings 21. Skirt 40 restricts the access to the accommodation openings 21 to an extent that an outer tube or cover cannot come into contact with rolling elements 20. Nevertheless, rolling elements 20 are sufficiently exposed so as to allow a visual inspection.

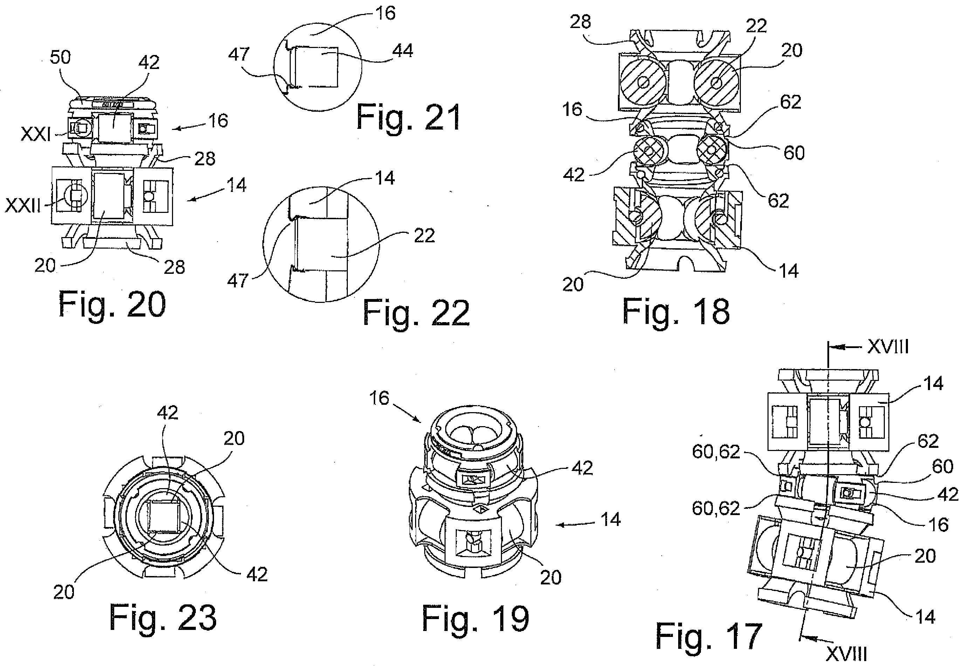

The bodies 16 of the second type also have a ring shape with an inner passage 18 for the wire. In a manner similar to the bodies 16 of the first type, rolling elements 42 are mounted on bearing pins 44. Here again, two pairs of mutually opposite rolling elements 42 are used. Each of the rolling elements 42 is arranged in an accommodation opening 46 extending from the outer circumference of body 16 to the inner passage. As can be seen in particular in FIG. 16, bearing pins 44 are arranged in a staggered manner such that one end of a bearing pin 44 overlaps with an axial end of the adjacent bearing pin. This results in an automatic blocking of the bearing pins 44 in one direction. Looking at bearing pin 44 which is shown on the right side of FIG. 16, it can be seen that this bearing pin is blocked by the bearing pin which is arranged at the lower side in FIG. 16. The opposite end of the bearing pins is fixed by a blocking protrusion 47 (please see in particular FIG. 21) which prevents that the bearing pins 44 unintentionally shift with respect to body 16.

As can be seen in particular in FIG. 15, the outer surface 48 at the opposite axial ends of body 16 is formed as a spherical segment, the radius of curvature of surfaces 48 corresponding to the radius of curvature of the contact surfaces 36 provided at the bodies 14 of the first type. In each surface 48 of the bodies 16 of the second type, an elastic ring 50 is arranged which is here formed as an O-ring.

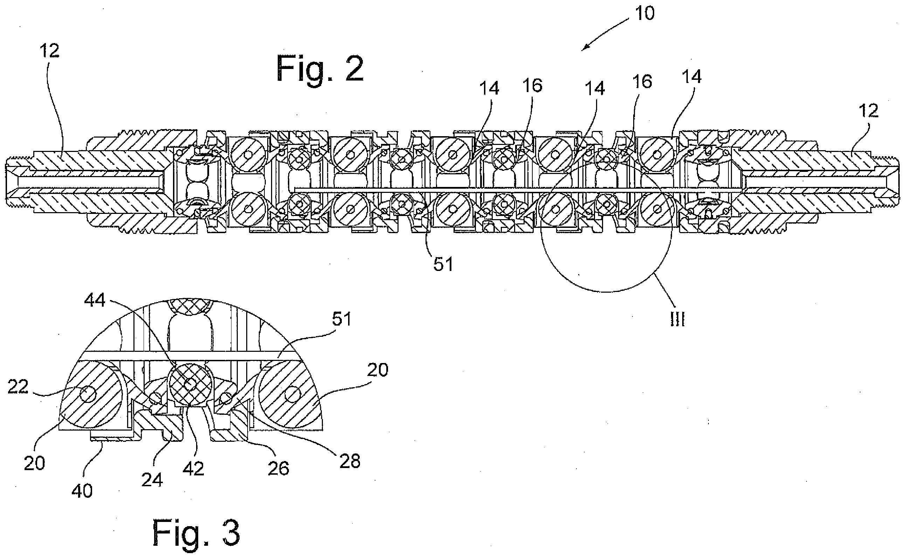

The diameter of rolling elements 42 mounted in bodies 16 of the second type is smaller than the diameter of rolling elements 20 mounted in bodies 14 of the first type. This can be seen in particular when comparing rolling elements 20 and 42 in FIG. 18. Further and according to the present invention, the distance between a center line of the liner and the rolling elements 20 mounted in bodies 14 of the first type (to be precise, between the center line and the circumference of the rolling element) is smaller than in case of the rolling elements 42 mounted in bodies 16 of the second type. In other words, rolling elements 20 of the body 14 of the first type define between them a passage for the wire which is narrower than the passage defined between rolling elements 42 mounted in body 16 of the second type. This results in the wire (please see wire 51 shown in FIG. 3) being generally supported by rolling elements 20 only, while rolling elements 42 mounted in body 16 of the second type being at a small distance from wire 51. The difference in the dimensions of passage 18 can also be seen in FIG. 23, in which rolling elements 20 protrude farther into passage 18 than rolling elements 42.

Between adjacent accommodation openings 46, body 16 of the second type is provided with a protruding stop surface 60 which is adapted to be contacted by a stop 62 provided at opposite ends of bodies 14 of the first type. Stop 62 is here formed by the axial end surfaces at clipping collar 28 of bodies 14 of the first type.

For mounting the liner, connecting elements 24, 26 are clipped to the bodies 14 of the first type. As the clipping connection between connecting elements 24, 26 and body 14 is identical on either side of body 14, no specific mounting orientation is to be observed. Even though it is preferred to use one male connecting element 24 and one female connecting element 26 per body 14, it in theory is also possible to have a first set of mounting bodies provided with two male connecting elements 24, and a second set of bodies 14 provided with two female connecting elements 26.

Before connecting bodies 14 to each other, one body 16 equipped with rolling elements 42 and elastic ring 50 is interposed between two bodies 14 of the first type arranged to each other. As can be seen in FIG. 19, body 16 is arranged such that its surface 48 is arranged within hollow spherical surface 36 formed within clipping collar 28. Then, the second body 14 of the first type is connected to the first one by engaging pivot pins 25 of male connecting elements 24 into pivot openings 27 of female connecting element 26. This results in body 14 of the second type being trapped between two bodies 14 of the first type arranged next to each other (please see in particular FIG. 18). Pivot pins 25 define the pivot axis which allows a swiveling movement between these two bodies 14 arranged next to each other. At the same time, an unlimited rotational movement around the center line of the liner is possible between the two bodies 14 as each of the connecting elements 24, 26 can rotate with respect to clipping collar 28.

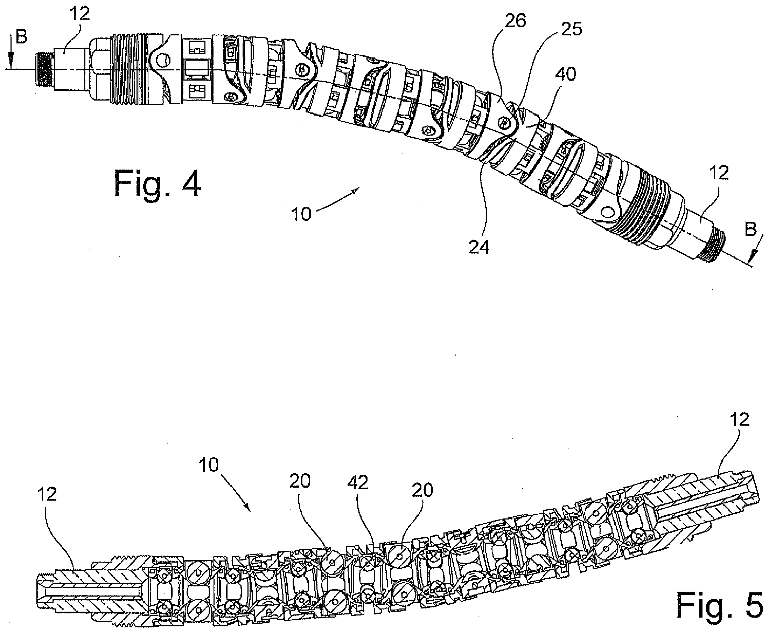

As can be seen in particular in FIG. 4 and FIG. 5, there is no particular orientation between the plurality of pivot axes which are defined between adjacent and interengaging connecting elements 24, 26. The pivot axes are arranged in a random orientation, and their orientation will change during use of the liner. In view of the random orientation, the liner is flexible in all directions and can adapt to the particular requirement.

As the pivot axis defined by pivot pins 25 runs through the center of curvature of both surfaces 36 and 48, a ball joint-like sliding movement between body 16 of the second type and the two bodies 14 of the first type arranged at either side of body 16 is possible. As can be seen in particular in FIGs. 17 and 18, stop surfaces 62 cooperate with stops 60 such that the maximum pivoting angle of two bodies 14 arranged next to each other is limited. The maximum pivoting angle is assumed when opposite stops 60 of body 16 of the second type is pinched between opposite stop surfaces 62 of the two bodies 14 arranged on either side of body 16.

In view of the modular construction of the liner, individual parts which require replacement can be removed and replaced by new pieces. Identical bodies 14 of the first type are used, and male or female connecting elements 24, 26 can be clipped to bodies 14 depending on the particular requirements. Looking at FIG. 1, it can be seen that female connecting elements 26 are clipped to the first and the last of bodies 14 of the first type, making it possible to connect identical (male) terminals 14 to the ends of the liner.

Bodies 16 with rolling elements 42 arranged between bodies 14 of the first type ensure that the welding wire can be inserted into the liner and pushed through the liner even if the liner is held in a curved condition. During use, rolling elements 42 mounted in body 16 of the second type will not (or at least not significantly) participate in guiding the wire.

An important feature of the invention is that the liner is formed by two different types of roll assemblies in which the assemblies are different in shape and size, they carry rolls of different diameter and they are specifically designed to perform a different task: the "feeding" assemblies in which rolls are contacted by the wire and the "guiding" assemblies, whose rolls only serve for the specific task of guiding the wire during insertion but do not contact the wire while it is being pulled and fed, during the welding process.

The feeding assemblies carry larger size rolls, designed to easily roll when in contact with the wire minimizing the attrition and the pulling effort of the wire feeder unit while the guiding assemblies carry smaller size rolls which only serve as guide during the insertion of the wire, but do not come in contact with the wire when the wire is being fed.

In a preferred embodiment of the invention, the assemblies freely rotate on their own axis by more than 360°, thus discharging whatever tension is built on the liner by the torsion of the robot movement. The connection system between the assemblies is also different: the guiding roll assemblies are locked and squeezed between the larger feeding roll assemblies, which in turn are connected by a pivoting lock. Owing to the particular construction and design of the liner described by the invention, the wire feeding is bi-directional and both ends can accommodate the same type of end connector, with no need to make two separate molds to produce two different end connectors and the end connectors also rotate by more than 360 ° .

In the preferred embodiment of the invention, the rolls of the "feeding" assembly can be mounted from the outside and visually inspected from the outside and this represents a considerable advantage because the operator can easily inspect the liner after it worked for some time and determine if some of the rolls are excessively dirty or worn out and he can easily replace only some of the assemblies rather than the whole liner.

It is an important feature of the invention that the bodies of the first type are of different shape than the bodies of the second type. This is the result of their different purpose (general guidance for the bodies of the first type, guidance mainly for insertion of the wire only for the bodies of the second type).

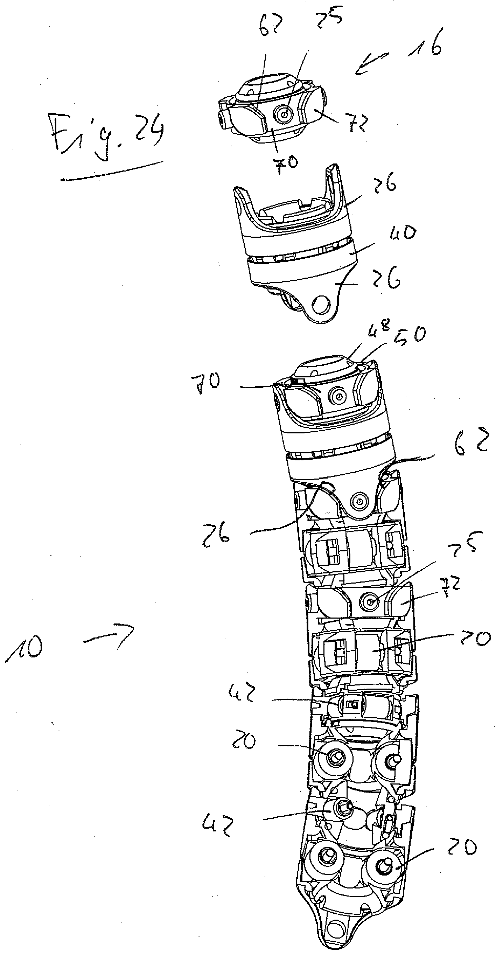

In FIGs. 24 to 32, a liner according to a second embodiment is shown. For elements known from the first embodiment, the same reference numerals are being used, and reference is made to the above comments given with respect to these elements.

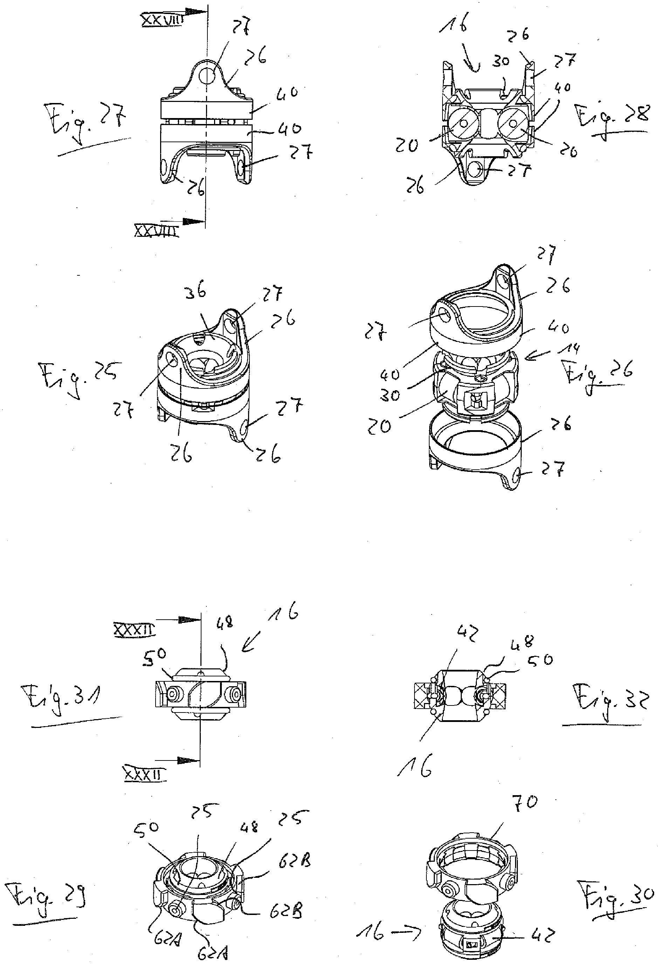

The main difference between the first and the second embodiment relates to the way the bodies 14 of the first type are connected to each other. In the second embodiment, each body 14 of the first type is provided with two identical connection elements 26 which are clipped to body 14 at opposite ends thereof (please see in particular Figures 25 to 28). Each of the connecting elements 26 has a skirt 40 which in combination cover the majority of the outer surface of body 14. However, a small gap is present between opposite end faces of skirts 40 so that visual inspection of rolling elements held within the respective body 14 is possible.

Each of the connecting elements 26 is formed as a female connecting element with two pivot openings 27 which are adapted for receiving pivot pins 25.

Unlike with the first embodiment, pivot pins 25, at the second embodiment, are associated with the bodies 16 of the second type. Pivot pins 25 are formed on a connecting ring 70 which is formed as a part separate from bodies 16 of the second type (please see in particular Figure 30). Each connecting ring 70 has an internal surface which is adapted to the bodies 16 of the second type so as to accommodate them such that rolling elements 42 are freely rotatable. At the outer surface of connection ring 70, the pivot pins 25 are arranged such that two diametrically opposite pairs are provided, which are arranged perpendicularly to each other. In other words, pivot pins 25 are spaced by 90° with respect to each other. Between adjacent pivot pins 25, stop blocks 72 are arranged at which stops 62 are formed. These have the form of stop surfaces which are arranged in an oblique orientation with respect to the center line of the liner and the bodies. It is important to note that the stop surfaces 62 arranged on opposite sides of one of the pivot pins 25 converge in a direction which is opposite to the direction in which the stop surfaces 62 of an adjacent pivot pin 25 converge. Looking at Figure 29, two stop surfaces 62A are identified which converge, with respect to Figure 29, in an upward direction while two stop surfaces 62B are identified which converge in a downward direction.

As can be seen in particular in Figure 24, connecting elements 26 are connected to the pivot pins 25 at connecting ring 70 from opposite directions. By attaching a body 14 of the first type to either side of connecting ring 70, a body 16 of the second type is located or trapped between adjacent bodies 14 of the first type. A rotation of the bodies with respect to each other is possible as the connecting elements 26 are freely rotatable by 360° wth respect to the body 14 of the first type to which they are clipped.

## Claims

1. A liner (10) for guiding wire (51), in particular welding wire, formed from bodies (14, 16) arranged successively so as to form the liner (10), each of the bodies (14, 16) carrying a set of rolling elements (20, 42), **characterized in that** the bodies (14, 16) are at least of two different types, wherein the rolling elements (20) held in the bodies (14) of the first type have a distance from a center line of the liner (10) which is smaller than the distance at which the rolling elements (42) held in the bodies (16) of the second type are arranged from the center line.

2. The liner (10) of claim 1 wherein the bodies (14, 16) of the first and second types arranged in an alternating manner.

3. The liner (10) of any of the preceding claims wherein the rolling elements (20) held in the bodies (14) of the first type have a diameter which is different from the diameter of the rolling elements (42) held in the bodies (16) of the second type, in particular a larger diameter.

4. The liner (10) of any of the preceding claims wherein adjacent bodies (14, 16) can be rotated around the center line of the liner in an unlimited manner.

5. The liner (10) of any of the preceding claims wherein the bodies (14) of the first type are connected to each other by means of a pivot connection.

6. The liner (10) of claim 5 wherein the amount of the pivoting movement of one body (14) of the first type with respect to the next body (14) of the first type is limited.

7. The liner (10) of any of the preceding claims wherein a ball joint-like contact is provided between the body (14) of the first type and the adjacent body (16) of the second type.

8. The liner (10) of any of the preceding claims wherein the bodies (14, 16) each have the general form of a ring.

9. The liner (10) of any of the preceding claims wherein the rolling elements (20, 42) are mounted on bearing pins (22, 44) held in the respective body (14, 16), each bearing pin (22, 44) being blocked at one end by an adjacent bearing pin (22, 44) and at the opposite end by a blocking protrusion (50) provided at the body.

10. The liner (10) of any of the preceding claims wherein connection elements (24, 26) are provided which are clipped to the bodies (14) of the first type.

11. The liner (10) of claim 10 wherein different types of connection elements (24, 26) are used for connecting the bodies (14) of the first type to each other, namely a male connection element (24) and a female connection element (26) which are mounted at opposite axial ends of two bodies (14) of the first type arranged next to each other.

12. The liner (10) of claim 10 wherein two identical connection elements (26) are arranged at opposite axial ends of the bodies (14) of the second type.

13. The liner (10) of any of the preceding claims wherein each of the bodies (16) of the second type is held trapped between two bodies (14) of the first type arranged next to each other.

## Patentansprüche

1. Ummantelung (10) zur Führung von Draht (51), insbesondere Schweißdraht, die aus Körpern (14, 16) gebildet ist, die aufeinander folgend so angeordnet sind, dass sie die Ummantelung (10) bilden, wobei jeder der Körper (14, 16) einen Satz Wälzkörper (20, 42) trägt, **dadurch gekennzeichnet, dass** die Körper (14, 16) von wenigstens zwei verschiedenen Typen sind, wobei die in den Körpern (14) des ersten Typs aufgenommenen Wälzkörper (20) einen Abstand von der Mittelachse der Ummantelung (10) haben, der kleiner als der Abstand von der Mittelachse ist, mit dem die in den Körpern (16) des zweiten Typs aufgenommenen Wälzkörper (42) angeordnet sind.

2. Ummantelung (10) nach Anspruch 1, wobei die Körper (14, 16) des ersten und des zweiten Typs abwechselnd angeordnet sind.

3. Ummantelung (10) nach einem der vorhergehenden Ansprüche, wobei die in den Körpern (14) des ersten Typs aufgenommenen Wälzkörper (20) einen Durchmesser haben, der vom Durchmesser der in den Körpern (16) des zweiten Typs aufgenommenen Wälzkörper (42) verschieden ist, insbesondere einen größeren Durchmesser.

4. Ummantelung (10) nach einem der vorhergehenden Ansprüche, wobei benachbarte Körper (14, 16) unbegrenzt um die Mittelachse der Ummantelung verdreht werden können.

5. Ummantelung (10) nach einem der vorhergehenden Ansprüche, wobei die Körper (14) des ersten Typs mittels einer Schwenkverbindung miteinander verbunden sind.

6. Ummantelung (10) nach Anspruch 5, wobei der Betrag der Schwenkbewegung eines Körpers (14) des ersten Typs bezüglich des nächsten Körpers (14) des ersten Typs begrenzt ist.

7. Ummantelung (10) nach einem der vorhergehenden Ansprüche, wobei zwischen dem Körper (14) des ersten Typs und dem benachbarten Körper (16) des zweiten Typs ein kugelgelenkartiger Kontakt vorgesehen ist.

8. Ummantelung (10) nach einem der vorhergehenden Ansprüche, wobei die Körper (14, 16) jeweils insgesamt die Form eines Ringes haben.

9. Ummantelung (10) nach einem der vorhergehenden Ansprüche, wobei die Wälzkörper (20, 42) an Lagerstiften (22, 44) angebracht sind, die in dem jeweiligen Körper (14, 16) aufgenommen sind, wobei jeder Lagerstift (22, 44) an einem Ende von einem benachbarten Lagerstift (22, 44) und am anderen Ende von einem am Körper vorgesehenen Blockiervorsprung (50) blockiert ist.

10. Ummantelung (10) nach einem der vorhergehenden Ansprüche, wobei Verbindungselemente (24, 26) vorgesehen sind, die an die Körper (14) des ersten Typs angeklipst sind.

11. Ummantelung (10) nach Anspruch 10, wobei Verbindungselemente (24, 26) unterschiedlicher Arten verwendet werden, um die Körper (14) des ersten Typs miteinander zu verbinden, nämlich ein Steckverbindungselement (24) und ein Buchsenverbindungselement (26), die an entgegengesetzten axialen Enden zweier nebeneinander angeordneter Körper (14) des ersten Typs angebracht sind.

12. Ummantelung (10) nach Anspruch 10, wobei zwei identische Verbindungselemente (26) an entgegengesetzten axialen Enden der Körper (14) des zweiten Typs angeordnet sind.

13. Ummantelung (10) nach einem der vorhergehenden Ansprüche, wobei jeder der Körper (16) des zweiten Typs zwischen zwei nebeneinander angeordneten Körpern (14) des ersten Typs eingeschlossen gehalten ist.

## Revendications

1. Chemise (10) pour le guidage de fil (51), en particulier de fil à souder, laquelle est réalisée à partir de corps (14, 16) agencés successivement de manière à former la chemise (10), chaque corps (14, 16) portant un jeu d'éléments roulants (20, 42), **caractérisée en ce que** les corps (14, 16) sont au moins de deux types différents, les éléments roulants (20) maintenus dans les corps (14) du premier type présentant une distance d'une ligne médiane de la chemise (10) qui est inférieure à la distance à laquelle les éléments roulants (42) maintenus dans les corps (16) du deuxième type sont espacés de la ligne médiane.

2. Chemise (10) selon la revendication 1, les corps (14, 16) du premier et du deuxième type étant agencés en alternance.

3. Chemise (10) selon l'une des revendications précédentes, les éléments roulants (20) maintenus dans les corps (14) du premier type présentant un diamètre qui est différent du diamètre des éléments roulants (42) maintenus dans les corps (16) du deuxième type et en particulier un diamètre supérieur.

4. Chemise (10) selon l'une des revendications précédentes, des corps adjacents (14, 16) étant aptes à être mis en rotation de manière non limitée autour de la ligne médiane de la chemise.

5. Chemise (10) selon l'une des revendications précédentes, les corps (14) du premier type étant reliés les uns aux autres au moyen d'une liaison à pivotement.

6. Chemise (10) selon la revendication 5, l'ampleur du mouvement de pivotement d'un corps (14) du premier type par rapport au prochain corps (14) du premier type étant limitée.

7. Chemise (10) selon l'une des revendications précédentes, un contact de type joint sphérique étant prévu entre le corps (14) du premier type et le corps adjacent (16) du deuxième type.

8. Chemise (10) selon l'une des revendications précédentes, les corps (14, 16) présentant chacun la forme générale d'un anneau.

9. Chemise (10) selon l'une des revendications précédentes, les éléments roulants (20, 42) étant montés sur des tourillons (22, 44) maintenus dans le corps respectif (14, 16), chaque tourillon (22, 44) étant arrêté à une extrémité par un tourillon adjacent (22, 44) et à l'extrémité opposée par une saillie d'arrêt (50) prévue sur le corps.

10. Chemise (10) selon l'une des revendications précédentes, des éléments de liaison (24, 26) étant prévus, lesquels sont clipsés sur les corps (14) du premier type.

11. Chemise (10) selon la revendication 10, différents types d'éléments de liaison (24, 26) étant utilisés pour relier les corps (14) du premier type les uns aux autres, c'est-à-dire un élément de liaison (24) mâle et un élément de liaison (26) femelle lesquels sont montés à des extrémités axiales opposées de deux corps (14) du premier type agencés l'un à côté de l'autre.

12. Chemise (10) selon la revendication 10, deux éléments de liaison identiques (26) étant agencés à des extrémités axiales opposées des corps (14) du deuxième type.

13. Chemise (10) selon l'une des revendications précédentes, chacun des corps (16) du deuxième type étant maintenu piégé entre deux corps (14) du premier type qui sont agencés l'un à côté de l'autre.
